# EUROPEAN PATENT APPLICATION

(11) **EP 2 978 053 A1**
(43) Date of publication of application: **27.01.2016**
(21) Application number: 14767333.9
(22) Date of filing: 12.03.2014
(51) Int. Cl.: H01M 4/88, H01M 4/86, H01M 8/02, H01M 8/10

(54) **SUBSTRATE FILM FOR CATALYST TRANSFER FILM AND METHOD FOR PRODUCING SAME, METHOD FOR PRODUCING CATALYST TRANSFER FILM, AND ELECTROLYTE MEMBRANE WITH CATALYST LAYER**

(30) Priority: 22.03.2013 JP 2013060350
(71) Applicant: Toppan Printing Co., Ltd., Tokyo 110-0016 (JP)
(72) Inventor: SAKURADA, Yu, Tokyo 110-0016 (JP)
(74) Representative: Hoffmann Eitle
(86) International application number: PCT/JP2014/001411
(87) International publication number: WO 2014/148011

(57) **Abstract**

A substrate film (1) for use in a catalyst transfer film (7) is provided. The substrate film (1) is used in a catalyst transfer film (10) that has the substrate film (1) and a catalyst layer (9) formed of a catalyst ink (8) on one surface of the substrate film (1), the catalyst transfer film transferring the catalyst layer (9) to a solid polymer electrolyte membrane (11). The substrate film (1) for use in a catalyst transfer film (7) is provided with a marginal edge layer (2) formed of a surface treatment material having no affinity for the catalyst ink (8), in an area of a marginal edge of a target area that is set in advance for forming a target pattern of the catalyst layer (9).

## Description

The present invention relates to a substrate film for use in a catalyst transfer film which is used for a solid polymer fuel cell, and a method for producing the substrate film, a method for producing a catalyst transfer film in which a catalyst layer for use as an electrode (anode or cathode) is formed on the substrate film for use in a catalyst transfer film, and a method for producing a catalyst coated membrane.

### BACKGROUND ART

Fuel cells make use of a power generation method in which a fuel, such as hydrogen, is electrochemically reacted with an oxidizer, such as air, to convert the chemical energy of the fuel into electrical energy and extract the converted energy. This power generation method has advantages, for example, of high power generation efficiency, being quite silent, and emitting only a small amount of NOx or Sox that is the cause of air pollution, or CO₂ that is the cause of global warming. Therefore, this power generation method is expected to generate power as new energy. As examples to which such fuel cells are applied, mention can be made of long-term power supplies for mobile electrical devices, stationary power generation hot-water feeders for cogeneration, fuel cell vehicles, and the like. Thus, applications and scales of the fuel cells are diverse.

Depending on the electrolytes to be used, fuel cells can be classified into a solid polymer type, a phosphate type, a molten carbonate type, a solid oxide type, an alkaline type, and the like. The operating temperatures of these types of cells are significantly different from each other, and accordingly the power generation scales or the industrial applications are also different from each other.

Fuel cells that use cation-exchange membranes as electrolyte membranes are called solid polymer fuel cells. Among fuel cells, the solid polymer fuel cells can be operated at a comparatively low temperature. Reduction in the thickness of the electrolyte membranes of the solid polymer fuel cells leads to reduction of the internal resistance and thus leads to high output and downsizing of the fuel cells. Accordingly, solid polymer fuel cells are expected to have a promising usage such as for in-vehicle sources or household stationary power supplies.

Such a solid polymer fuel cell includes a junction body called a catalyst coated membrane (CCM) in which a pair of electrode catalyst layers are arranged on respective surfaces of an electrolyte membrane of a solid polymer. The junction body is sandwiched between a pair of separator plates in which gas channels are formed to supply a fuel gas that contains hydrogen to one of the electrodes and supply an oxidant gas that contains oxygen to the other electrode. The cell sandwiched between the pair of separator plates is referred to as a single cell.

The solid polymer fuel cell is formed by stacking two or more single cells for the purpose of increasing output density and decreasing the size of the fuel cell as a whole. The number of single cells to be stacked depends on the electric power needed. Portable power supplies for generally used mobile electric devices each need single cells numbering in the order of several to ten, and stationary electric and hot-water feeders for cogeneration each need single cells numbering in the order of 60 to 90. Further, for use in automobiles, of the order of 250 to 400 single cells are needed. To achieve high output, the number of single cells to be stacked is required to be increased. Accordingly, the cost of the single cells greatly influences the total cost of the fuel cell. From the viewpoint of process cost, it is desirable to use the structure of a catalyst coated membrane that has a smaller number of parts and facilitates assemblage.

A method called a transfer method is drawing attention as a method for producing a catalyst coated membrane.

In the transfer method, a catalyst layer is formed on a substrate film to prepare a catalyst transfer film. Such catalyst transfer films are arranged on both respective surfaces of an electrolyte membrane so that the catalysts are opposed to each other, followed by hot pressing. Subsequently, only the substrate films are separated to form the catalyst layers on the electrolyte membrane, thereby producing a catalyst coated membrane.

The catalyst layers of the catalyst coated membrane can have various shapes (patterns) depending on the usage. It is needed that a catalyst layer of a desired shape (pattern) be formed.

PLTs 1 and 2 each disclose producing a catalyst coated membrane which is formed with catalyst layers of a desired shape. According to these literatures, a catalyst layer is transferred to an electrolyte membrane from a catalyst transfer film, with a mask member having a predetermined opening being sandwiched between the catalyst transfer film and the electrolyte membrane. In this case, the catalyst transfer film is formed in advance with the catalyst layer which is a little larger than a catalyst layer of a desired shape. Performing transfer in this way, a catalyst coated membrane which is formed with catalyst layers of a desired shape can be produced.

### CITATION LIST

### PATENT LITERATURE

PLT 1: JP-A-2008-077984
PLT 2: JP-A-2008-077986

### SUMMARY OF THE INVENTION

### TECHNICAL PROBLEM

However, in PLTs 1 and 2, the catalyst layer formed on each catalyst transfer film has a size which is a little larger than the size of the catalyst layer which is to be finally transferred to an electrolyte membrane, and thus the waste of the catalyst layer is large. The catalyst layer contains a noble metal catalyst, such as of platinum. Therefore, the waste of the catalyst layer raises a problem of increasing manufacturing cost of the catalyst coated membrane.

Further, in PLTs 1 and 2, hot pressing performed via the mask member is likely to damage the mask member. Thus, there is a problem that, in addition to the substrate film of the catalyst transfer film, the mask member also has to be a subsidiary material.

Further, in PLTs 1 and 2, an excessive force is applied, at the time of hot pressing, to an area where the mask member overlaps with the catalyst layer, raising a problem that the electrolyte membrane is likely to be damaged. The pressing force can be weakened to suppress the excessive application of the force to the area where the mask member overlaps with the catalyst layer. However, this may lead to a problem of causing imperfect transfer.

The present invention has been made considering the problems set forth above and has as its object to provide a substrate film for use in a catalyst transfer film, in which the waste of catalyst and the use of subsidiary materials are limited, and a catalyst transfer film that uses the substrate film, and to provide a catalyst coated membrane which causes neither damage to a solid polymer electrolyte membrane at the time of hot pressing, nor imperfect transfer when the pressing force is weakened, and a method for producing these films and the membrane.

### SOLUTION TO PROBLEM

In order to solve the problems set forth above, the present invention adopts a substrate, which is configured as follows, for use in a catalyst transfer film.

A first aspect of the present invention is a substrate film for use in a catalyst transfer film having the substrate film and a catalyst layer formed by a catalyst ink on one surface of the substrate film, the catalyst transfer film transferring the catalyst layer to a solid polymer electrolyte membrane, characterized in that: a marginal edge layer formed of a surface treatment material having no affinity for the catalyst ink is provided in an area of a marginal edge of a target area that is set in advance for forming the catalyst layer into a target pattern.

According to a second aspect of the present invention, the surface treatment material may be a water-repellent surface treatment material.

According to a third aspect of the present invention, the water-repellent surface treatment material may be a silane coupling agent.

According to a fourth aspect of the present invention, the target area may have a water contact angle of not more than 15 degrees, while the marginal edge area may have a water contact angle of not less than 100 degrees.

A fifth aspect of the present invention is a method for producing a substrate film for use in a catalyst transfer film having the substrate film and a catalyst layer formed by a catalyst ink on one surface of the substrate film, the catalyst transfer film transferring the catalyst layer to a solid polymer electrolyte membrane, characterized in that the method includes: a target area forming step of coating a surface treatment material, which has no affinity for the catalyst ink, throughout one surface of the substrate film, followed by removing the surface treatment material on a target area that is set in advance for forming the catalyst layer into a target pattern.

According to a sixth aspect of the present invention, the target area forming step according to the fifth aspect may use, as a method of removing the surface treatment material, a method of applying vacuum-ultraviolet light onto the one surface via a photomask having a surface that is machined and formed with a pattern which is the same as the target pattern.

A seventh aspect of the present invention is a method for producing a catalyst transfer film having a substrate film that is produced by the method for producing a substrate film according to the fifth or sixth aspect, and a catalyst layer formed of a catalyst ink, the method including a catalyst ink dropping step of dropping the catalyst ink onto the target area.

According to an eighth aspect of the present invention, the method for producing a substrate film according to the seventh aspect may further include a removing step of removing a surface treatment material on an area of a marginal edge of the target area.

According to a ninth aspect of the present invention, the removing step according to the method for producing a substrate film according to the eighth aspect may use, as a method of removing the surface treatment material, a method of applying vacuum-ultraviolet light onto the marginal edge area.

A tenth aspect of the present invention is a catalyst coated membrane produced by transferring a catalyst layer for use as an electrode to a solid polymer electrolyte membrane by means of a catalyst transfer film that is produced by the method for producing a catalyst transfer film according to any one of the seventh to ninth aspect.

An eleventh aspect of the present invention is the catalyst coated membrane according to the tenth aspect in which a distance of not more than 2.0 µm is provided between an outermost position and an innermost position in a marginal edge portion of the catalyst layer that is formed on at least one surface of the solid polymer electrolyte membrane.

### ADVANTAGEOUS EFFECTS OF THE INVENTION

According to the catalyst transfer film using a substrate film for use in the catalyst transfer film of the present invention, a catalyst layer of a desired shape can be transferred and formed without using a mask member that will be a subsidiary material. Thus, the resultant subsidiary materials can be reduced.

Further, when the catalyst layer is formed in the course of producing the catalyst transfer film, the catalyst layer of a desired pattern can be formed by only coating the catalyst ink onto the area having affinity for the catalyst ink. Since there is no ink to be discarded and accordingly there is no waste of the catalyst ink, the cost incurred in the production can be reduced.

Further, According to the method for manufacturing a catalyst coated membrane that uses the catalyst transfer films of the present invention, each catalyst layer is transferred without being interposed by a mask member. This can prevent an excessive force from being applied to a specific portion in performing hot pressing. Accordingly, the catalyst layers can be formed neither causing damage to the solid polymer electrolyte membrane, nor causing imperfect transfer when the pressing force is weakened.

### BRIEF DESCRIPTION OF THE DRAWINGS

[Fig. 1] Fig. 1 shows schematic diagrams illustrating a method for producing a catalyst transfer film in order of steps, according to an embodiment of the present invention;
[Fig. 2] Fig. 2 is a cross-sectional view schematically illustrating a method for producing a catalyst coated membrane, using a transfer method related to an embodiment of the present invention;
[Fig. 3] Fig. 3 is a diagram illustrating a catalyst coated membrane, according to an embodiment of the present invention; and
[Fig. 4] is an enlarged view of the portion C indicated in Fig. 3, illustrating a marginal edge of a catalyst coated membrane, according to an embodiment of the present invention.

### DESCRIPTION OF EMBODIMENTS

Hereinafter is described in detail an embodiment of the present invention.

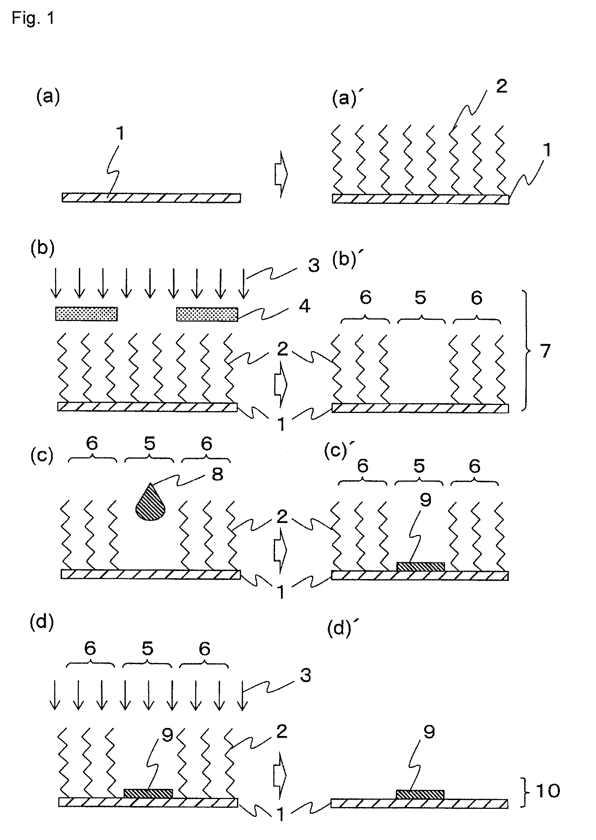

Fig. 1 Fig. 1 shows schematic diagrams illustrating a method for producing a catalyst transfer film in order of steps, according to an embodiment of the present invention.

The method for producing a catalyst transfer film related to the present embodiment includes a target area forming step. At this step, a hydrophilic area 5, which has an affinity for a catalyst ink 8, is set in advance on a substrate film 1 to form a catalyst layer 9 in a desired pattern (hereinafter referred to as "target pattern") for use as an electrode. Through this step, a water-repellent area 6 is formed in an area of a marginal edge of the hydrophilic area 5 by using a surface treatment agent having no affinity for the catalyst ink 8. In addition, the present embodiment includes a catalyst ink dropping step in which the catalyst ink 8 is dropped onto the hydrophilic area 5, thereby forming the catalyst layer 9. Furthermore, the present embodiment includes a removing step in which the surface treatment agent on the water-repellent area 6 is removed. The hydrophilic area corresponds to the target area of the present invention, and the water-repellent area corresponds to the marginal edge area of the present invention.

First, an overall surface of the substrate film 1 is coated with a surface treatment agent ((a') of Fig. 1). In the present embodiment, a silane coupling agent is used as the surface treatment agent. The surface of the substrate film 1 is subjected to water-repellent treatment by a low surface energy functional group of the silane coupling agent. Thus, use of a water-repellent surface treatment material can form a marginal edge layer which enables accurate patterning of the catalyst layer using a water-soluble ink.

As the substrate film 1, mention can be made, for example, of a polymer film made such as of polyimide, polyethylene terephthalate, polyamide (nylon), polysulfone, polyethersulfone, polyphenylene sulfide, polyether ether ketone, polyetherimide, polyarylate, polyethylene naphthalate, or the like.

The surface treatment agent is not particularly limited as far as it has no affinity for the catalyst ink 8 and can be removed by vacuum-ultraviolet light 3. However, the surface treatment agent is desirably a silane coupling agent because of its having a low surface energy functional group. Desirably, fluoroalkylsilane whose bond can be easily decomposed by the vacuum-ultraviolet light 3 is used from among silane coupling agents.

Further, the method for coating the surface treatment agent onto the substrate film 1 includes, but not particularly limited to, spray coating, spin coating, chemical vapor deposition, immersion, or the like.

Subsequently, a reusable photomask 4 in a predetermined shape is arranged above the substrate film 1 and the vacuum-ultraviolet light 3 is applied from above the photomask 4 ((b) of Fig. 1). The photomask 4, which is reusable, has a surface in which a pattern identical with the target pattern is formed. The vacuum-ultraviolet light 3 is applied to one surface of the substrate film 1 via the photomask 4 to decompose only the silane coupling agent on the surface applied with the vacuum-ultraviolet light 3 to thereby form the hydrophilic area 5 (target area forming step). The silane coupling agent on the surface not applied with the vacuum-ultraviolet light 3 remains as it is without being decomposed, and this remaining area configures the water-repellent area 6. Since a marginal edge layer 2 is formed on the water-repellent area 6 by the silane coupling agent, the water-repellent area 6 has a water contact angle larger than that on the hydrophilic area 5, thereby forming two areas having mutually different water contact angles. In this way, a substrate film for use in a catalyst transfer film can be obtained ((b') of Fig. 1).

As far as the Si-C bond of the silane coupling agent can be cut off, the wavelength of the vacuum-ultraviolet light is not particularly limited. However, the wavelength is desirably 172 nm with which the Si-C bond can be easily cut off.

Further, when the water contact angle of the hydrophilic area 5 is not more than 15 degrees, while that of the water-repellent area 6 is not less than 100 degrees, the catalyst layer is ensured to be more accurately patterned with a water-soluble ink.

The target area forming step described above includes a process of coating a silane coupling agent onto the overall surface of the substrate film 1, followed by a process of removing the silane coupling agent in a portion corresponding to a target pattern. Since the two processes are comparatively simple, the time taken for the production is shortened.

Subsequently, the catalyst ink 8 that contains electrically conductive catalyst support particles, a polymer electrolyte, and a solvent is prepared and dropped onto the hydrophilic area 5 (catalyst ink dropping step, (c) of Fig. 1). Thus, a coating is formed on the hydrophilic area 5, and the solvent in the formed coating is removed to form the catalyst layer 9 ((c') of Fig. 1).

It should be noted that the catalyst ink 8 used in the present invention is specifically produced by uniformly mixing electrically conductive fine carbon particles (average particle size: about 20 to 100 nm) and a polymer solution in a solvent (e.g., water) having no affinity for the silane coupling agent. In this case, the electrically conductive fine carbon particles are carbon black, for example, having a surface that supports fine particles of platinum or an alloy of appropriately formulated platinum and other metal (e.g., Ru, Rh, Mo, Cr, Co or Fe) (desirably having an average particle size of not more than 10 nm), while the polymer solution, for example, is a solution of perfluorosulfonic acid resin.

Then, the vacuum-ultraviolet light 3 is applied onto the substrate film 1 on which the catalyst layer 9 has been formed, thereby decomposing/removing the marginal edge layer 2 formed of the surface treatment agent and remaining on the substrate film 1 (removing step, (d) of Fig. 1). Vacuum-ultraviolet light 3 is favorably used because it easily decomposes the silane coupling agent as described above.

Through the steps described above, the silane coupling agent is entirely removed from the surface of the substrate film 1, leaving the catalyst layer 9 alone, to thereby obtain the catalyst transfer film 10 ((d') of Fig. 1). This is how the method for producing the catalyst transfer film according to the present embodiment is configured.

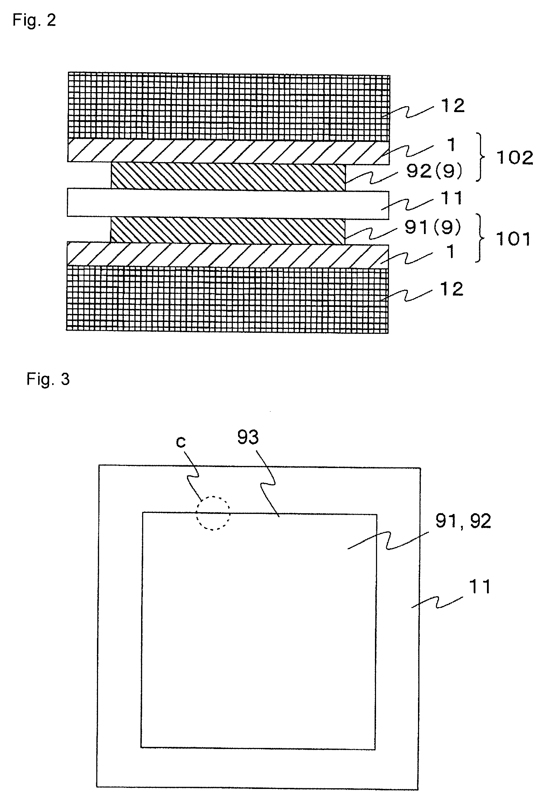

Fig. 2 is a cross-sectional view schematically illustrating a method for producing a catalyst coated membrane related to the present embodiment.

In the method for producing a catalyst coated membrane related to the present embodiment, the catalyst transfer film 10 obtained as described above is stacked on both surfaces of a solid polymer electrolyte membrane 11, followed by hot pressing by means of a heating platen 12 for pressing. In Fig. 2, the catalyst transfer film stacked on one surface of the solid polymer electrolyte membrane 11 configures an anode catalyst transfer film 101, while its catalyst layer configures an anode catalyst layer 91. Further, the catalyst transfer film stacked on the other surface configures a cathode catalyst transfer film 102, while its catalyst layer configures a cathode catalyst layer 92. After hot pressing, the two substrate films 1 are separated from the stack of the catalyst transfer films 10 and the solid polymer electrolyte membrane 11. Resultantly, the two catalyst layers 91 and 92 are transferred to the solid polymer electrolyte membrane 11 to thereby obtain a catalyst coated membrane. This is how the method for producing a catalyst coated membrane related to the present embodiment is configured.

The configuration of the components at the time of hot pressing is not particularly limited. However, it is desirable that the anode catalyst transfer film 101 formed with the anode catalyst layer 91 and the cathode catalyst transfer film 102 formed with the cathode catalyst layer 92 are arranged being correctly positioned face to face on respective both surfaces of the solid polymer electrolyte membrane 11, and that the anode catalyst layer 91 and the cathode catalyst layer 92 are concurrently transferred to the solid polymer electrolyte membrane 11. Further, at the time of hot pressing, a buffer member may be inserted between the stack of the catalyst transfer film 10 and the solid polymer electrolyte membrane 11, and the heating platen 12 so that the force applied at the time of hot pressing is equalized. Thus, a catalyst coated membrane of higher quality can be obtained.

In the method for producing a catalyst transfer film related to the present embodiment, an area having an affinity for a catalyst ink and an area having no affinity therefor are patterned on a substrate film. Then, a catalyst ink is dropped onto the area having an affinity, and only the dropped catalyst ink is used for the formation of a catalyst layer. Since there is no ink to be discarded, there is no waste of the catalyst ink and thus the catalyst coated membrane can be produced at low cost.

Further, in the method for manufacturing a catalyst transfer film related to the present embodiment, a reusable photomask is used to form a catalyst layer of a desired pattern. Accordingly, the catalyst transfer film can be produced by limiting subsidiary materials to only the substrate film used for the catalyst transfer film.

Further, in the method for producing a catalyst coated membrane using the catalyst transfer films related to the present embodiment, in transferring the catalyst layers, an excessive force is prevented from being applied, at the time of hot pressing, to the marginal edge portions of the catalyst layer forming areas. Owing to this, the electrolyte membrane is prevented from being damaged, or imperfect transfer is prevented from occurring when the pressing pressure is weakened.

Fig. 3 is a top view or a bottom view of a catalyst coated membrane, when a principal plane thereof is viewed squarely, to explain the catalyst coated membrane according to the embodiment of the present invention. In the catalyst coated membrane according to the present embodiment, the anode catalyst layer 91 or the cathode catalyst layer 92 is formed on one surface of the solid polymer electrolyte membrane 11. The anode catalyst layer 91 or the cathode catalyst layer 92 formed by the method for producing a catalyst coated membrane related to the present embodiment has a marginal edge portion 93. Since the anode catalyst layer 91 or the cathode catalyst layer 92 is accurately patterned using a photomask, the marginal edge portion 93 is in a shape with a clearer contour, compared to the marginal edge portion of a catalyst layer formed by using a conventional method.

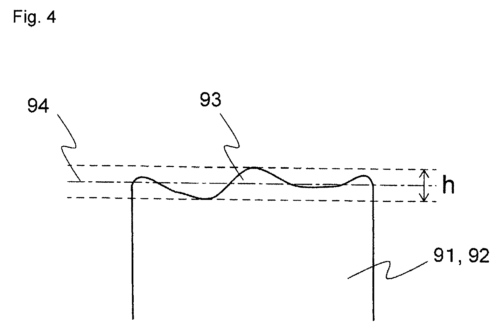

Fig. 4 is a partial enlarged view of Fig. 3, illustrating the marginal edge portion 93 of the catalyst coated membrane according to the embodiment of the present invention. The marginal edge portion 93 of the anode catalyst layer 91 or the cathode catalyst layer 92 in a plan view of a principal plane of each of them is ensured to be formed so as to have a distance h of not more than 2.0 µm between a position where the layer juts outermost and a position where the layer juts innermost in the outward direction in an end portion of one side of the catalyst layer.

Between the outermost position and the innermost position of the marginal edge portion 93, an outer marginal edge line based on an ideal shape of a catalyst layer is set as a reference line 94. A peak that maximizes the length of the catalyst layer 92 outward from the reference line 94 corresponds to the outermost position of the marginal edge portion 93 as indicated by the upper dashed line of Fig. 4. Further, a valley that maximizes the length of the catalyst layer 92 inward from the reference line 94 corresponds to the innermost position of the marginal edge portion 93 as indicated by the lower dashed line of Fig. 4. In other words, a difference between the maximum peak and the maximum valley corresponds to the distance h between the outermost position and the innermost position. When a gasket used for sealing a fuel gas is stuck onto the electrolyte membrane around the catalyst layer of the catalyst coated membrane, the distance h of not more than 2.0 µm can facilitate alignment between the marginal edge portion of the catalyst layer and an end portion of the gasket. Owing to the facilitated alignment, the area of the catalyst layer is prevented from being reduced, which would otherwise have been reduced due to the overlap of the catalyst layer with the gasket, or the electrolyte membrane is prevented from being exposed.

On the other hand, in the case of a catalyst layer formed by using a conventional method, when the marginal edge portion is viewed from above, the difference between a maximum peak and a maximum valley becomes larger than 2.0 µm. Therefore, when a gasket is stuck onto an electrolyte membrane around the catalyst layer of the catalyst coated membrane, an exposed portion of the electrolyte membrane, which is at least larger than 2.0 µm, is formed between the marginal edge portion of the catalyst layer and an end portion of the gasket. Resultantly, there is no way of preventing formation of a gap between the catalyst layer and the gasket.

It should be noted that a method of measuring the difference between the maximum peak and the maximum valley is not particularly limited. The difference can be calculated by performing image recognition of the marginal edge portion of the catalyst layer by means of a camera or the like, and performing length measurement. Specifically, the marginal edge portion of the anode catalyst layer 91 or the cathode catalyst layer 92 (e.g., one side of the catalyst layer) is observed, and measurement is made between the set reference line 94 and the outermost position, and between the reference line 94 and the innermost position. These two distances from the reference line 94 are summed up to thereby actually measure the distance h that is the difference between the maximum peak and the maximum valley.

### Examples

The following description deals with the method for producing the catalyst transfer film of the present invention by way of a specific example. It should be noted that the following example is one example of the present invention. The present invention should not be construed as being limited to this example alone.

### (Step of coating a surface treatment agent on one overall surface of a substrate film)

Vacuum-ultraviolet light having a wavelength of 172 nm was applied onto a polyethylene terephthalate film (hereinafter referred to as PET film) to form a hydroxyl group on a surface of the PET film. Then, in order to have the hydroxyl group on the PET film reacted with a hydrolyzed silane coupling agent, fluoromethoxy silane (trade name: KBM-7103 manufactured by Shin-Etsu Chemical Co., Ltd.) that was a fluoroalkyl-based silane coupling agent and the PET film that was formed with the hydroxyl group were heated up to 160°C, followed by chemical vapor deposition (CVD), thereby forming the silane coupling agent on the PET film.

### (Step of removing the surface treatment agent on a hydrophilic area)

Vacuum-ultraviolet light having a wavelength of 172 nm was applied onto the PET film on which the silane coupling agent was formed, via a photomask having a 50 mm-square opening, with a surface on which a predetermined pattern was formed. Resultantly, two areas were patterned, one being a hydrophilic area having an affinity for a catalyst ink, in which the silane coupling agent was decomposed, and the other being a water-repellent area having no affinity for the catalyst ink, in which the silane coupling agent remained.

### (Step of forming a catalyst layer)

A platinum-on-carbon catalyst (trade name: TEC10E50E, manufactured by Tanaka Kikinzoku Kogyo) with an amount of supported platinum being 50%, and Nafion (trademark, manufactured by E. I. du Pont de Nemours and Company) that was a polymer electrolyte solution of 20 mass% were mixed with water as a solvent. Then, the resultant mixture was subjected to a dispersion process by means of a planetary ball mill to prepare a catalyst ink.

The prepared catalyst ink was dropped onto the hydrophilic area on the PET film formed by patterning and having an affinity for a catalyst ink to form a coating film. Subsequently, the coating film was dried to form a catalyst layer. In this case, the cathode catalyst layer and the anode catalyst layer were prepared so as to have an amount of supported platinum of about 0.5 mg/cm² and about 3 mg/cm², respectively.

### (Removing step of removing the surface treatment agent on the water-repellent area)

Vacuum-ultraviolet light having a wavelength of 172 nm was applied onto the PET film on which the catalyst layer was formed to decompose/remove the silane coupling agent in the water-repellent area which had been formed in the marginal edge portion of the catalyst layer and having no affinity for the catalyst ink, thereby obtaining a catalyst transfer film.

Then, two catalyst transfer films were placed on both respective sides of an electrolyte membrane so that both of the catalyst layers were correctly positioned face to face. As the electrolyte membrane, Nafion 211 (manufactured by E. I. du Pont de Nemours and Company) was used. Then, the resultant object was subjected to hot pressing under the conditions of 130°C and 6 MPa to separate only the PET films, thereby providing a catalyst coated membrane.

Use of the catalyst transfer films according to the present embodiment enabled preparation of the catalyst coated membrane which caused no waste of catalyst ink and which limited subsidiary materials only to the substrate films of the catalyst transfer films.

Observing the catalyst layers of the prepared catalyst coated membrane, no imperfect transfer was found. Further, observing a cross section of the prepared catalyst coated membrane, no damage was found in the catalyst layer forming portions and in the electrolyte membrane in the marginal edge portions of the catalyst layers.

### Industrial Applicability

The present invention can be favorably applied to solid polymer fuel cells, in particular to a single solid polymer fuel cell or a stack of the cells for use in fuel-cell vehicles or household fuel cells.

### REFERENCE SIGNS LIST

- 1: Substrate film
- 2: Marginal edge layer
- 3: Vacuum-ultraviolet light
- 4: Photomask
- 5: Area having an affinity for catalyst ink (hydrophilic area)
- 6: Area having no affinity for catalyst ink (water-repellent area)
- 7: Substrate film for use in catalyst transfer film
- 8: Catalyst ink
- 9: Catalyst layer
- 91: Anode catalyst layer
- 92: Cathode catalyst layer
- 93: Marginal edge portion
- 94: Reference line
- 10: Catalyst transfer film
- 101: Anode catalyst transfer film
- 102: Cathode catalyst transfer film
- 11: Solid polymer electrolyte membrane
- 12: Heating platen for pressing

## Claims

1. A substrate film for use in a catalyst transfer film having the substrate film and a catalyst layer formed by a catalyst ink on one surface of the substrate film, the catalyst transfer film transferring the catalyst layer to a solid polymer electrolyte membrane, **characterized in that**:
a marginal edge layer formed of a surface treatment material having no affinity for the catalyst ink is provided in an area of a marginal edge of a target area that is set in advance for forming the catalyst layer into a target pattern.

2. The substrate film for use in a catalyst transfer film according to claim 1, **characterized in that** the surface treatment material is a water-repellent surface treatment material.

3. The substrate film for use in a catalyst transfer film according to claim 2, **characterized in that** the water-repellent surface treatment material is a silane coupling agent.

4. The substrate film for use in a catalyst transfer film according to claim 2 or 3, **characterized in that** the target area has a water contact angle of not more than 15 degrees, while the marginal edge area has a water contact angle of not less than 100 degrees.

5. A method for producing a substrate film for use in a catalyst transfer film having the substrate film and a catalyst layer formed by a catalyst ink on one surface of the substrate film, the catalyst transfer film transferring the catalyst layer to a solid polymer electrolyte membrane, **characterized in that** the method comprises:
a target area forming step of coating a surface treatment material, which has no affinity for the catalyst ink, throughout one surface of the substrate film, followed by removing the surface treatment material on a target area that is set in advance for forming the catalyst layer into a target pattern.

6. The method for producing a substrate film for use in a catalyst transfer film according to claim 5, **characterized in that** the target area forming step uses, as a method of removing the surface treatment material, a method of applying vacuum-ultraviolet light onto the one surface via a photomask having a surface that is formed with a pattern which is the same as the target pattern.

7. A method for producing a catalyst transfer film having a substrate film that is produced by the method for producing a substrate film according to claim 5 or 6, and a catalyst layer formed of a catalyst ink, **characterized in that** the method comprises a catalyst ink dropping step of dropping the catalyst ink onto the target area.

8. The method for producing a catalyst transfer film according to claim 7, **characterized in that** the method further comprises a removing step of removing a surface treatment material on an area of a marginal edge of the target area.

9. The method for producing a catalyst transfer film according to claim 8, **characterized in that** the removing step uses, as a method of removing the surface treatment material, a method of applying vacuum-ultraviolet light onto the marginal edge area.

10. A catalyst coated membrane produced by transferring a catalyst layer for use as an electrode to a solid polymer electrolyte membrane by means of a catalyst transfer film that is produced by the method for producing a catalyst transfer film according to any one of claims 7 to 9.

11. The catalyst coated membrane according to claim 10, **characterized in that** a distance of not more than 2.0 µm is provided between an outermost position and an innermost position in a marginal edge portion of the catalyst layer that is formed on at least one surface of the solid polymer electrolyte membrane.
